# FASCICULE DE BREVET EUROPEEN

(11) **EP 0 589 808 B1**
(45) Date de publication et mention de la délivrance du brevet: **17.12.1997**
(21) Numéro de dépôt: 93420381.1
(22) Date de dépôt: 23.09.1993
(51) Int. Cl.: G05B 19/408

(54) **Perfectionnements à un tour d'outillage pourvu de moyens de commande assistés par l'électronique**
Verbesserungen an einer Werkzeugdrehbank durch Versehen mit elektronisch unterstützten Steuerungsvorrichtungen
Improvements to a tool turret provided with electronically assisted control means

(30) Priorité: 25.09.1992 FR 9211846
(43) Date de publication de la demande: 30.03.1994
(73) Titulaire: SOMAB Société Anonyme, F-03000 Moulins (FR)
(72) Inventeur: Jacquard, Bernard, F-03400 Yzeure (FR); Herpson, Marcel, F-03400 Yzeure (FR)
(74) Mandataire: Chanet, Jacques

(56) Documents cités:
- EP-A- 0 404 950
- WO-A-88/05936
- DE-A- 3 941 480
- US-A- 5 122 717
- PATENT ABSTRACTS OF JAPAN vol. 012, no. 336 (M-739)9 Septembre 1988 & JP-A-63 099 109 (MURATA MACH LTD.) 30 Avril 1988

## Description

La présente invention est du domaine des machines-outil, et elle a pour objet des perfectionnements à un tour d'outillage à déplacement d'outil programmable.

Un genre de tour de ce type, comportant des perfectionnements par rapport aux tours de l'art antérieur, a été divulgué par une publication de la présente Demanderesse WO-A-88/05 936, à l'intégralité de laquelle il est fait référence pour situer les présents perfectionnements.

Suivant cette publication, un tour d'outillage du genre de tour dit "parallèle" dans lequel l'avance de l'outil est fonction de la rotation (n) du mandrin, permettant de réaliser notamment les opérations de chariotage, (déplacement (z) de l'outil parallèlement à l'axe de mandrin), de dressage (déplacement (x) de l'outil perpendiculairement à l'axe de broche), d'interpolation linéaire de filetage (déplacement rapide de l'outil en proportion de l'angle de rotation du mandrin), de raccordement de cônes (succession d'une interpolation linéaire, d'une interpolation circulaire partielle et d'une seconde interpolation linéaire), ledit tour comportant des moyens de calcul et de commande numériques et réunis en un centre calculateur-opérateur, dit "automate", pour provoquer les déplacements de l'outil, ledit tour d'outillage pouvant comporter des moyens de mémorisation électronique d'un profil d'usinage, et de recopiage de ce profil.

Toujours suivant la publication précitée, le tour de l'art antérieur incorpore en outre :
- des moyens, dits premiers, comprenant les touches d'un premier clavier pour sélectionner au moins un profil d'usinage, ou trajectoire de l'outil, parmi une pluralité de trajectoires élémentaires comprenant le chariotage, le dressage, la trajectoire à interpolation linéaire et la trajectoire à interpolation circulaire, le filetage externe,
- des moyens dits deuxièmes, comprenant les touches d'un deuxième clavier pour l'outil ayant été amené manuellement au moyen d'un couple de manivelles électroniques dans une position initiale (xₒ,zₒ), appeler un, ou successivement plusieurs paramètres de cette trajectoire dans le groupe de paramètres comprenant une longueur de chariotage, un diamètre final de passe de dressage, un angle de cône, un rayon d'usinage, un pas (avance par tour) de filetage, et pour, à la suite de l'appel de paramètre, introduire la valeur numérique de ce paramètre,
- des moyens dits troisièmes, comprenant un écran de visualisation, pour visualiser le type de profil d'usinage sélectionné, le ou les paramètres appelés et leurs valeurs numériques introduites,
- des moyens, dits quatrièmes, de mémorisation pour, une première série d'opérations ayant été réalisée sur une ébauche, mémoriser l'ensemble des mouvements de l'outil et pour, une autre ébauche identique à la première ayant été mise à la place de la première, reproduire sur cette autre ébauche l'ensemble des mouvements mémorisés,
- des moyens, dits manipulateurs pour, un profil d'usinage au moins ayant été sélectionné et l'outil étant dans la position initiale, enclencher le déplacement de l'outil sur sa trajectoire ou inversement l'arrêter en un point quelconque de celle-ci.

Cette définition constitue à la connaissance de la Demanderesse, l'art antérieur de la présente invention.

Selon la présente invention un tour d'outillage du genre précité associe des moyens de commande manuelle par manivelles électroniques, des moyens de sélection d'opérations élémentaires enregistrées, avec leurs moyens de paramètrage, et des moyens de mémorisation, l'ensemble de ces moyens existant déjà dans le tour antérieur, à des moyens de programmation en commande numérique CN (langage ISO), les opérations de commande, de sélection et de paramètrage étant générées en langage ISO par un générateur, ou interface de transcription, dont est pourvu le tour ; en d'autres termes, le tour perfectionné selon la présente invention comporte des claviers perfectionnés par rapport aux claviers du tour antérieur, à savoir : un clavier de sélection des profils, un clavier d'appel des paramètres, un clavier numérique, un tableau des boutons-poussoirs de diverses commandes, un tableau des manivelles et manipulateurs ; le tour de l'invention comporte en outre un clavier de CN.

De manière plus précise, le tour d'outillage objet des présents perfectionnements est caractérisé : en ce qu'il comprend en outre :
- des moyens dits cinquièmes, ou interface de transcription, pour transcrire en langage ISO le programme des mouvements mémorisé par les quatrièmes moyens,
- un clavier (8) de commande numérique (CN) et
- les moyens informatiques de la CN
de telle sorte que, une série d'opérations d'usinage ayant été réalisée et mémorisée sous forme d'un programme d'usinage, ce programme, transcrit en langage ISO, peut être lu, exécuté et/ou modifié par les moyens de la CN, sans qu'il soit besoin de refaire le programme.

Les perfectionnements consistent encore dans l'adjonction de certaines opérations élémentaires programmées : taraudage, usinage de gorge, enchaînement droite-rayon-droite.

Les perfectionnnements consistent encore en l'adjonction d'une tourelle automatique multiposte, d'un mandrin automatique et d'une contre-pointe automatique ;enfin le pupitre de commande est dissocié de l'équipage mobile porte-outil et coulisse librement le long du bâti du tour autorisant indifféremment son positionnement à la droite ou à la gauche de l'opérateur.

Il résulte principalement de la coexistence des claviers CN, des autres claviers et moyens de commande, que l'on peut modifier par des opérations propres à la Commande Numérique un programme réalisé par apprentissage, manuellement et/ou par opérations élémentaires enregistrées, ce qui dans la majorité des cas entraîne un gain de temps de programmation important par rapport à une programmation CN intégrale.

La présente invention sera mieux comprise, et des détails en relevant apparaîtront, à la description qui va être faite d'un tour perfectionné selon l'invention, en relation avec les figures des planches annexées dans lesquelles :
- la fig.1 est une vue en perspective d'un tour selon l'invention,
- la fig.2 est une perspective d'un ensemble banc et socle monoblocs équipant le tour de la figure précédente,
- la fig.3 est une perspective d'une tourelle porte-outil équipant le même tour,
- la fig.4 est une vue en plan du tableau de sélection-paramètrage des opérations élémentaires et des fonctions,
- la fig.5 est une représentation analogue du tableau des organes de commande manuelle,
- la fig.6 est une représentation analogue du tableau des manivelles.

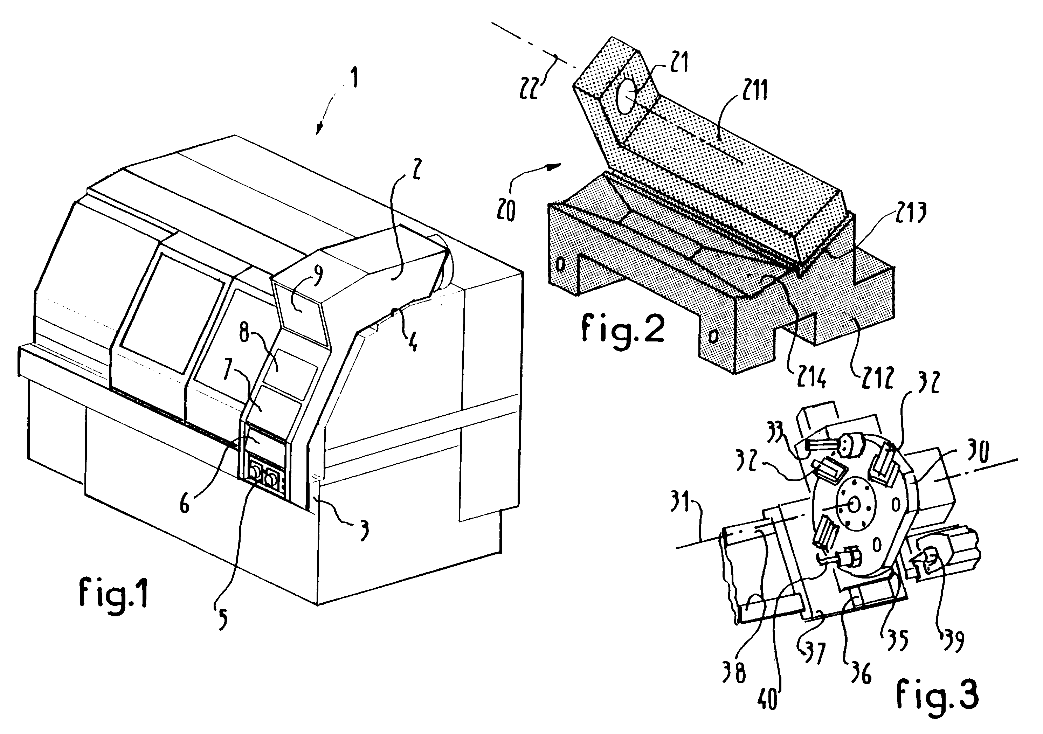

Sur la fig.1, un tour 1 comportant les perfectionnements de l'invention, diffère, extérieurement, du tour de l'art antérieur par son pupitre 2 qui est mobile le long du tour sur des chemins de roulement 3 et 4, indépendamment de l'équipage mobile porte-outil. Dans un mode de réalisation non représenté le pupitre 2 est séparé complèment du tour et il est supporté par un chariot de roulage au sol.

Le pupitre 2 comporte une pluralité de tableaux, à savoir et de bas en haut : un tableau 5 dit des manivelles électroniques, un tableau 6 dit des boutons-machine, un tableau 7 dit de sélection-paramètrage des trajectoires d'outil, enfin un tableau 8 dit de commande numérique CN ; ce dernier tableau n'existait pas dans le tour antérieur. Enfin le pupitre 2 comporte un écran vidéo, ou moniteur, 9.

Sur la fig.2 il apparaît que l'ossature des bancs est formée d'un ensemble 20 consitué d'un banc-poupée monobloc 211 en "granit reconstitué" et d'un socle 212 en béton hydraulique ; le banc-poupée 211 comporte un orifice 21 de passage du palier de l'axe 22 de broche ; le socle 212 a une face supérieure conformée, sur une partie, en trémie 214 pour la récupération des copeaux et des différents fluides, et sur une autre partie en berceau 213 pour recevoir le banc-poupée ; les faces latérales et/ou arrière du socle supportent le moteur de broche, une armoire électrique, la carrosserie du tour, un tiroir à copeaux et comportent des points de suspension de la machine complète.

Sur la fig.3 l'équipage mobile porte-outil est constitué par une tourelle 30 rotative autour d'un axe 31 paralèlle à l'axe de broche 22 (fig.2) ; on remarque que la tourelle supporte des porte-outils 32 pour des outils extérieurs ou intérieurs à extension radiale, et des porte-outils 33 pour des outils à extension axiale, tels qu'un foret 34 et un outil de taraudage 40 ; la tourelle est montée sur un chariot 36 coulissant sur une glissière 37 en plan incliné elle-même solidaire d'un chariot 37 lui-même monté coulissant sur deux glissières horizontales 38 assujéties au banc 20 (fig.2). La poupée mobile et la contrepointe 39 qu'elle supporte sont analogues à celles du tour divulgué antérieurement.

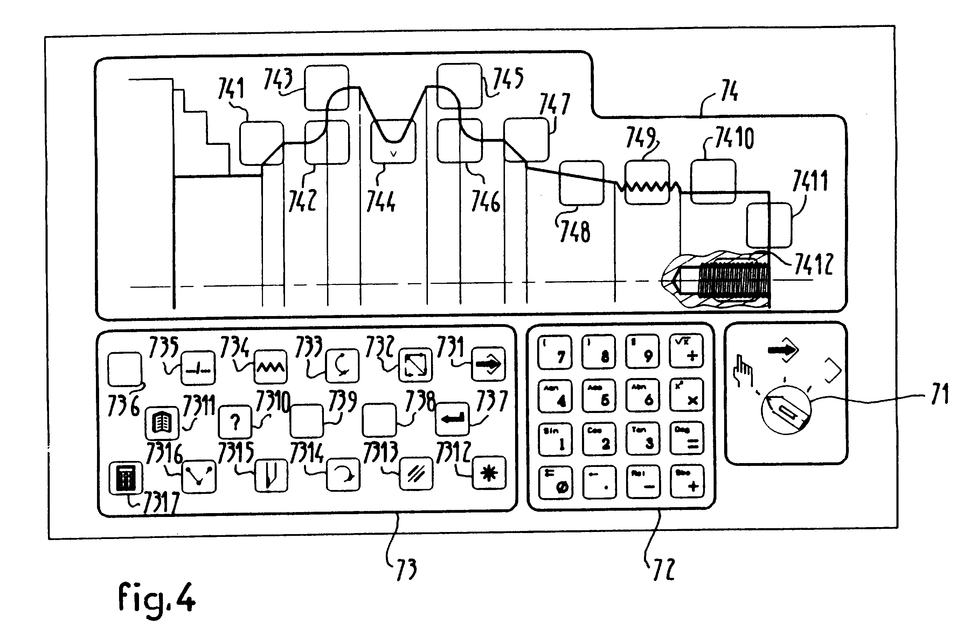

Sur la fig.4, le tableau comporte un sélecteur 71 verrouillable à clé à trois positions : mode manuel, mode apprentissage, mode répétition (analogue au commutateur 33 du tour antérieur), un clavier numérique 72 dont les touches sont celles d'une "calculette" scientifique (opérations arithmètiques,fonctions trigonomètriques, etc...), enfin un clavier 73 dit d'introduction de données dont l'organisation diffère de manière importante de celle du clavier 23 du tour antérieur, et un clavier 74 de sélection d'opérations enregistrées qui se distingue aussi de l'antériorité par des opérations supplèmentaires.

Toujours sur la fig.4, le clavier 73 comprend une touche 731 de mémorisation, une touche 732 de répétition, une touche 733 de dégagement, une touche 734 des avances, une touche 735 de suite, une touche 736 de deuxième fonction (scientifique) des touches de la calculette, une touche 737 de validation de page, une touche 738 de mise en réserve d'affectation pour option, une touche 739 de mise en réserve d'affectation pour option, une touche 7310 de message, une touche 7311 de menu d'aide, une touche 7312 d'entrée d'une donnée, une touche 7313 de R à Z (remise à zéro), une touche 7314 de rappel d'axes, une touche 7315 de dimensions d'outils (jauges et correcteurs), une touche 7316 de sélection de gamme de vitesse de broche, enfin une touche 7317 de calculette.

Toujours sur la fig.4, le clavier 74 comprend, superposées au dessin d'un profil d'usinage complexe, une touche 741 de chanfrein descendant, une touche 742 de rayon quadrant inférieur droit, une touche 743 de rayon quadrant supérieur gauche, une touche 744 d'enchaînement pente-rayon-pente, une touche 745 de rayon quadrant supérieur droit, une touche 746 de rayon quadrant inférieur gauche, une touche 747 de chanfrein montant, une touche 748 de cône, une touche 749 de filetage, une touche 7410 de chariotage, une touche 7411 de dressage, enfin une touche 7412 de taraudage axial.

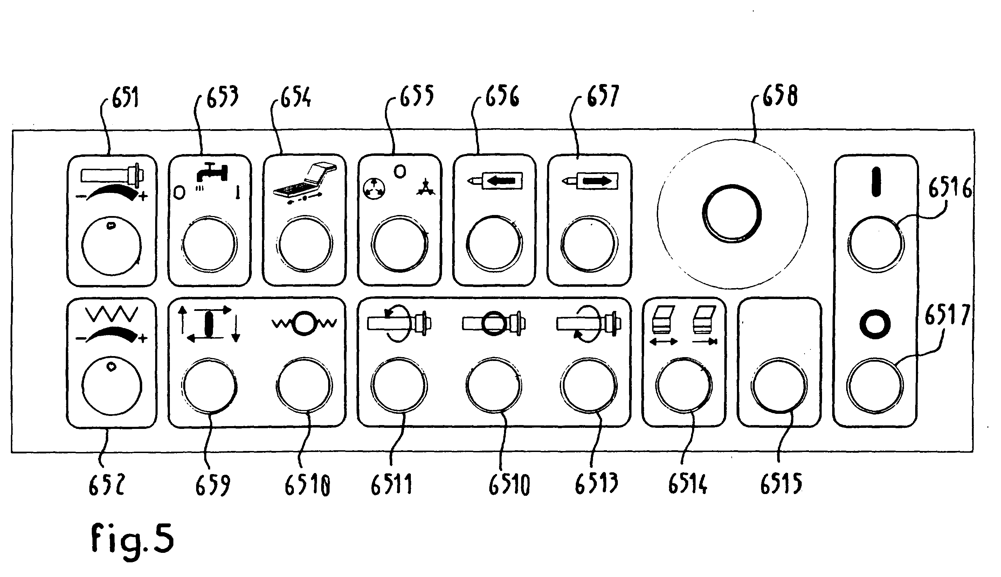

Sur la fig.5, le tableau 6 des boutons-machine comporte des organes dont la manipulation agit directement sur le fonctionnement de la machine, à savoir : un potentiomètre 651 de réglage de la vitesse de rotation broche (50 à 100 %), un potentiomètre 652 de réglage de la vitesse d'avance (0 à 100 %), un sélecteur à deux positions (marche - arrêt) 653 de commande d'arrosage, un sélecteur à trois positions (marche continue - marche par à-coup à action maintenue - arrêt) 654 de commande d'évacuateur à copeaux, un sélecteur à deux positions verrouillable à clé 655 de commande de serrage du mandrin intérieur/extérieur, un bouton-poussoir 656 de commande de l'avance de la contre-pointe, un bouton-poussoir 657 de commande du recul de la contre-pointe, un bouton-poussoir 658 de commande de l'arrêt d'urgence blocable et dévérouillable à clé, un bouton-poussoir 659 de commande du départ du mouvement (cycle), un bouton-poussoir 6510 de commande de l'arrêt d'avance, un bouton-poussoir 6511 de commande de la rotation de la broche dans le sens anti-trigonomètrique, un bouton-poussoir 6512 de commande de l'arrêt de la broche, un bouton-poussoir 6513 de commande de la rotation de la broche dans le sens trigonomètrique, un sélecteur à deux positions 6514 de commande du niveau de protection verrouillable à clé, un sélecteur 6515 à deux positions de commande du sélecteur de pupitre CN verrouillable à clé, un bouton-poussoir de commande de mise sous tension des axes, enfin un bouton-poussoir 6517 de commande de mise hors tension des axes.

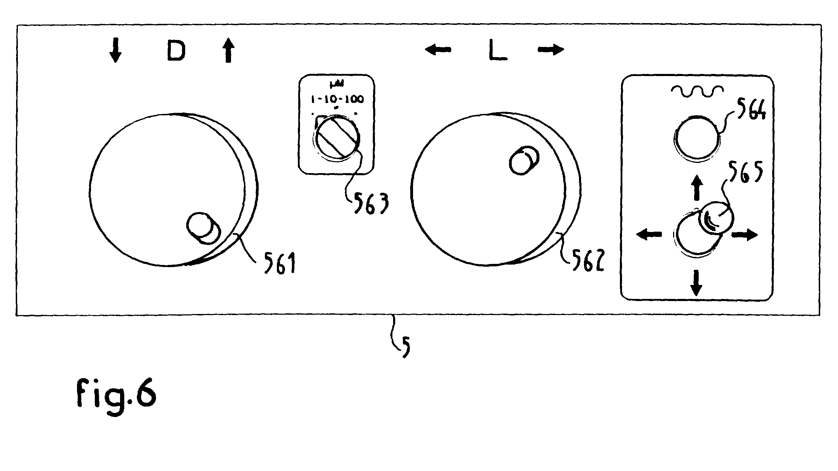

Sur la fig.6, le tableau 5 des manivelles comporte une première manivelle électronique 561 commandant le mouvement de l'outil suivant l'axe transversal, une seconde manivelle électronique 562 commandant le mouvement de l'outil suivant l'axe longitudinal, un bouton-poussoir 563 permettant de sélectionner l'incrémentation de la manivelle par un, dix, ou cent micromètres, un bouton-poussoir 564 de sélection de l'avance rapide de l'outil, enfin un manipulateur 565 dont l'inclinaison maintenue dans l'une des quatre directions (longitudinale, transversale, sens-aller, sens-retour) commande l'avance rapide suivant l'axe et le sens choisi.

On devra comprendre à la lecture de ce qui précède que l'invention porte, non sur la nature, l'appelation ou la disposition des organes de commande représentés sur les tableaux, mais, bien évidemment sur les fonctions qu'ils représentent et qu'ils commandent ; ainsi indiquer que le clavier 74 comprend une touche de 741 de chanfrein descendant, c'est indiquer que le tour comprend la fonction d'éxécuter automatiquement, par l'intermédiaire de moyens (série d'instructions d'un programme informatique) dont la description ne rentre pas dans l'objet de la présente Demande et qui relèvent de l'art de l'informaticien, l'opération d'usinage d'un tel chanfrein; il en est ainsi pour chacun des organes de commande de chacun des tableaux.

## Revendications

1. Tour d'outillage du genre de tour dit parallèle dans lequel l'avance de l'outil est fonction de la rotation (n) du mandrin, permettant de réaliser notamment les opérations de chariotage, (déplacement (z) de l'outil parallèle à l'axe de broche), de dressage (déplacement (x) de l'outil perpendicaire à l'axe de broche), d'interpolation linéaire de filetage (déplacement rapide de l'outil en proportion de l'angle de rotation de la broche), de raccordement de cônes (succession d'une interpolation linéaire, d'une interpolation circulaire partielle et d'une seconde interpolation linéaire), ledit tour comportant des moyens de calcul et de commande numériques et réunis en un centre calculateur-opérateur, dit encore processeur ou automate, pour provoquer les déplacements de l'outil, ledit tour d'outillage pouvant comporter des moyens de mémorisation électronique d'un profil d'usinage et de recopiage de ce profil, plus particulièrement du genre de tour incorporant en outre :
- des moyens, dits premiers, comprenant les touches d'un premier clavier (74) pour sélectionner au moins un profil d'usinage, ou trajectoire de l'outil, parmi une pluralité de trajectoires élémentaires comprenant le chariotage, le dressage, la trajectoire à interpolation linéaire et la trajectoire à interpolation circulaire, le filetage externe,
- des moyens dits deuxièmes, comprenant les touches d'un deuxième clavier (73) pour l'outil ayant été amené manuellement au moyen d'un couple de manivelles électroniques dans une position initiale (xₒ,zₒ), appeler un, ou successivement plusieurs paramètres de cette trajectoire dans le groupe de paramètres comprenant une longueur de chariotage, un diamètre final de passe de dressage, un angle de cône, un rayon d'usinage, un pas (avance par tour) de filetage, et pour, à la suite de l'appel d'un paramètre, introduire la valeur numérique de ce paramètre,
- des moyens dits troisièmes, comprenant un écran de visualisation (9), pour visualiser le type de profil d'usinage sélectionné, le ou/les paramètres appelés et leurs valeurs numériques introduites,
- des moyens (71), dits quatrièmes, de mémorisation pour, une première série d'opérations ayant été réalisée sur une ébauche, mémoriser l'ensemble des mouvements de l'outil et pour, une autre ébauche identique à la première ayant été mise à la place de la première, reproduire sur cette autre ébauche l'ensemble des mouvements mémorisés,
- des moyens, dits manipulateur (565), pour, un profil d'usinage au moins ayant été sélectionné et l'outil étant dans la position initiale, déclencher le déplacement de l'outil sur sa trajectoire ou inversement l'arrêter en un point quelconque de celle-ci caractérisé :
en ce qu'il comprend en outre :
- des moyens dits cinquièmes, ou interface de transcription, pour transcrire en langage ISO le programme des mouvements mémorisé par les quatrièmes moyens,
- un clavier (8) de commande numérique (CN) et
- les moyens informatiques de la CN
de telle sorte que, une série d'opérations d'usinage ayant été réalisée et mémorisée sous forme d'un programme d'usinage, ce programme, transcrit en langage ISO, peut être lu, exécuté et/ou modifié par les moyens de la CN, sans qu'il soit besoin de refaire le programme.

2. Tour d'outillage selon la revendication 1, caractérisé :
en ce que lesdits premiers moyens comprennent en plus des trajectoires d'outil sus-énumérées, le taraudage (7412) (filetage interne), l'usinage de gorge (744), l'enchaînement droite-rayon-droite (742, 743, 745, 746) ;

3. Tour d'outillage selon la revendication 2, caractérisé :
en ce qu'il comprend en outre un mandrin à serrage-desserrage automatique et une contre-pointe à commande de fourreau automatique ;

4. Tour d'outillage selon la revendication 3, caractérisé :
en ce qu'il comprend en outre une tourelle multiposte automatique (30) ;

5. Tour d'outillage selon la revendication 4, caractérisé :
en ce que le pupitre de commande (2) est dissocié de l'équipage mobile porte-outil (fig.3) et coulisse librement le long du bâti du tour.

## Patentansprüche

1. Drehbank, sogenannte Paralleldrehbank, bei welcher der Vorschub des Werkzeuges eine Funktion des Umlaufes (n) des Futters ist, insbesondere ermöglichend die Vorgänge des Langdrehens (Verfahren (z) des Werkzeugs parallel zur Spindelachse), des Abrichtens (Verfahren (x) des Werkzeugs senkrecht zur Spindelachse), der linearen Interpolation des Gewindeschneidens (rasches Verfahren des Werkzeuges in bezug auf den Umlaufwinkel der Spindel), des Verbindens von Konen (Aufeinanderfolge einer linearen Interpolation, einer partiellen Kreisinterpolation sowie einer zweiten linearen Interpolation), wobei die Drehbank Rechenvorrichtungen und numerische Steuervorrichtungen aufweist, die in einem Rechen-Bedienungszentrum angeordnet sind, dem sogenannten Prozessor oder Automaten, um das Verfahren des Werkzeuges auszulösen, wobei die Drehbank elektronische Speichermittel eines Bearbeitungsprofiles und einer Kopie dieses Profiles aufweisen kann, insbesondere jene Art von Drehbank, die u.a. umfaßt:
- sogenannte erste Mittel, umfassend die Tasten einer ersten Tastatur (74), um wenigstens ein Bearbeitungsprofil oder eine Laufbahn des Werkzeuges aus einer Vielzahl von elementaren Laufbahnen auszuwählen, umfassend das Langdrehen, das Abrichten, die Laufbahn mit linearer Interpolation und die Laufbahn mit Kreisinterpolation, das Schneiden von Außengewinden;
- sogenannte zweite Mittel, umfassend die Tasten einer zweiten Tastatur (73), um nach dem Einstellen des Werkzeuges mittels eines Paares von elektronischen Handgriffen in eine Ausgangsposition (xₒ, zₒ), einen oder aufeinanderfolgend mehrere Parameter dieser Laufbahn abzurufen, darunter die Parameter der Länge des Langdrehens, eines Enddurchmessers des Abrichtens, eines Konuswinkels, eines Bearbeitungsradius, einer Steigung (Vorschub pro Umlauf) des Gewindeschneidens und im Anschluß an das Abrufen eines Parameters das Einführen des numerischen Wertes dieses Parameters;
- sogenannte dritte Mittel, umfassend einen Bildschirm (9), um den Typus des ausgewählten Bearbeitungsprofils sowie den oder die abgerufenen Parameter und deren eingeführte numerische Werte zu visualisieren;
- sogenannte vierte Mittel (71), um nach Durchführen einer ersten Reihe von Operationen auf einer Vordrehbank die Gesamtheit der Bewegungen des Werkzeuges abzuspeichern und um nach dem Einsetzen einer weiteren, der ersten Vordrehbank identischen, Vordrehbank an die Stelle der ersten auf dieser zweiten Vordrehbank die Gesamtheit der abgespeicherten Bewegungen zu reproduzieren;
- einen sogenannten Manipulator (565), um, nachdem wenigstens ein Bearbeitungsprofil ausgewählt wurde und sich das Werkzeug in seiner Ausgangsposition befindet, das Verfahren des Werkzeuges auf seiner Laufbahn oder umgekehrt dessen Anhalten an irgendeinem Punkt auszulösen, dadurch gekennzeichnet, daß diese u.a. umfaßt:
- sogenannte fünfte Mittel oder Umschreibungsinterface, um das Programm der durch die vierten Mittel abgespeicherten Bewegungen in ISO-Sprache umzuschreiben;
- eine Tastatur (8) zur numerischen Steuerung (CN) und
- die Informationsmittel der CN derart, daß eine Serie von Bearbeitungsvorgängen ausgeführt und abgespeichert wurde in Gestalt eines Bearbeitungsprogrammes, wobei dieses Programm, umgeschrieben in ISO-Sprache, gelesen, ausgeführt und/oder modifiziert werden kann durch die Mittel der CN, ohne daß es notwendig ist, das Programm erneut zu schreiben.

2. Drehbank nach Anspruch 1, dadurch gekennzeichnet, daß die genannten ersten Mittel außerdem unternumerierte Werkzeug-Laufbahnen aufweisen, das Schneiden von Innengewinden (7412), das Bearbeiten von Hohlkehlen (744), die Verkettung Rechts-Radius-Rechts (742, 743, 745, 746).

3. Drehbank nach Anspruch 2, dadurch gekennzeichnet, daß diese u.a. einen Dorn zum automatischen Spannen und Entspannen aufweist sowie eine Gegenspitze mit automatischen Pinolenfutter.

4. Drehbank nach Anspruch 3, dadurch gekennzeichnet, daß diese einen automatischen Mehrfach-Werkzeughalter (30) aufweist.

5. Drehbank nach Anspruch 4, dadurch gekennzeichnet, daß das Steuerpult getrennt ist von der beweglichen Werkzeugträgerausrüstung (Figur 3) und frei entlang des Gestells der Drehbank gleitet.

## Claims

1. A tool lathe, of the so-called center lathe type, wherein the advance of the tool is a function of the rotation (n) of the chuck, making it possible to perform particularly the operations of turning (displacement (z) of the tool parallell to the axis of the rod), of facing (displacement (x) of the tool perpendicular to the axis of the rod), of linear threading interpolation (rapid displacement of the tool in proportion to the angle of rotation of the rod), of taper joining (succession of a linear interpolation, of a partial circular interpolation and of a second linear interpolation), said lathe comprising means of calculation and digital control and located in a computer/operator center, also called a processor or automaton , in order to cause the displacements of the tool, it being possible for said tool lathe to comprise means to memorize electronically a machining contour and for copying, more particularly of the kind of lathe incorporating besides :
- means, called first means, consisting of the keys of a first keyboard (74), for selecting at least one machining contour, or tool path , from a plurality of elementary paths comprising turning, facing, linear interpolation path and circular interpolation path and external threading,
- means, called second means, consisting of the keys of a second keyboard (73), in order to, when the tool has been brought manually by means of a pair of electronic levers into an initial position (xₒ,zₒ) call one or successively more parameters of this path in the group of parameters comprising a turning length, a final facing pass diameter, an angle of taper, a machining radius, a threading pitch (advance per turn), and in order to, following the calling of one parameter, introduce the digital value of this parameter.
- means, called third means, consisting of a displaying screen (9), in order to display the type of machining contour selected, the parameter or parameters called and their digital values introduced,
- means, called fourth means (71), of storage for, a first series of operations having been carried out on a blank , memorise the whole of the movements of the tool and for, another blank identical to the first having been put at the place of the first, to reproduce on this other blank the whole of the memorised movements,
- means, called handling means (565) in order to, a machining contour at least having been selected and the tool being in the initial position, trigger the displacement of the tool on its path or alternatively to stop it at any point of the latter,
which comprises moreover :
- means called fifth means, or interface of translating, to translate in ISO language the memorised program of the movements, by the fourth means,
- a key (8) of numerical control (NC) and
- the data processing means of the NC
so that, a series of operations of machining having been carried out and memorised under the form of a machining program, this program once translated in ISO language, can be read, carried out and/or modified by the means of the NC, without it be necessary to do the program again.

2. The lathe as claimed in claim 1, wherein the said first means comprise besides the tool pathcs above-listed, the tapping (7412) (internal threading), the machining of groove (744), the link the right-radius-right (742,743,745,746).

3. The lathe as claimed in claim 2, wherein it comprises besides a chuck with a chuck with an automatic clamping and a tailstock with an automatic control of the sheath.

4. The lathe as claimed in claim 3, wherein ,it consists of besides an automatic multi-user turret (30).

5. The lathe as claimed in claim 4, wherein the desk of control (2) is broken up of the moving chuck equipment (fig.3) and slides freely along the frame of the turret.
